# EUROPEAN PATENT SPECIFICATION

(11) **EP 4 617 634 B1**
(45) Date of publication and mention of the grant of the patent: **15.07.2026**
(21) Application number: 24220509.4
(22) Date of filing: 17.12.2024
(51) Int. Cl.: G01M 1/32

(54) **BALANCING MACHINE**
AUSWUCHTMASCHINE
MACHINE À ÉQUILIBRER

(30) Priority: 14.03.2024 IT 202400005746
(43) Date of publication of application: 17.09.2025
(73) Proprietor: Cormach S.r.l. Correggio Macchine, 42015 Correggio (RE) (IT)
(72) Inventor: CABASSI, Luca, 42015 CORREGGIO (RE) (IT)
(74) Representative: Ing. C. Corradini & C. S.R.L.

(56) References cited:
- CN-A- 116 547 063
- US-A1- 2020 041 373

## Description

### TECHNICAL FIELD

The present invention relates to a dynamic balancing machine for vehicle wheels.

### PRIOR ART

As is known, dynamic balancing machines for vehicle wheels, i.e., for wheel rims equipped with a tyre, are generally provided with a supporting frame which rotatably supports a shaft, driven in rotation by a motor, on which the wheel is fixed removably and rotationally integral with the shaft.

Such balancing machines are provided with an apparatus for measuring the forces acting on the shaft during the rotational drive thereof and the wheel mounted thereon, capable of identifying any cyclic forces in a direction perpendicular to the rotation axis of the shaft. These forces with a cyclic trend are caused by asymmetries in the distribution of the masses of the set formed by the rim with the tyre, and are balanced by placing appropriate compensating masses at points on the rim indicated by the balancing machine following the measurement of the forces acting on the shaft.

In order to allow an effective allocation of the balancing masses, the balancing machines are provided with a laser pointer which indicates to a balancing machine operator where to position them.

US 2020/041373 A1 discloses a wheel balancing machine with a laser indicator.

The laser pointer, in order to indicate the correct allocation, is driven in rotation by an actuator around an axis orthogonal to the rotation axis of the shaft.

In order to function, as is known, the laser pointer is electrically connected by means of electric cables to an electrical power source.

A known drawback in the art, however, is that the rotation of the laser pointer in order to indicate the allocation point of the compensating masses on the rim causes a mechanical stress on the electrical power cables, which over time leads to damage or complete breakage thereof, compromising the operation of the laser pointer and, consequently, of the balancing machine itself.

An object of the present invention is to solve said drawback of the prior art.

Such an object is achieved by the features of the invention reported in the independent claim. The dependent claims outline preferred and/or particularly advantageous aspects of the invention.

### DISCLOSURE OF THE INVENTION

The invention, in particular, provides a balancing machine for wheels provided with a rim equipped with a tyre comprising:
- a supporting frame,
- a drive motor fixed to the supporting frame and adapted to drive in rotation a shaft rotatably associated with the supporting frame according to a rotation axis and on which the wheel is adapted to be removably mounted integral in rotation with the shaft,
- a laser pointer configured to (i.e., adapted to) indicate on the wheel rim an allocation position of a compensating mass (or balancing mass), the laser pointer being rotatably associated with the supporting frame with respect to a rotation axis orthogonal to the rotation axis of the shaft (and hence of the wheel) and driven around said rotation axis by an actuator,
   said laser pointer being (adapted to be) electrically powered by means of a wireless electricity transfer system.

Thanks to such a solution, the operation of the laser pointer is particularly robust and is not compromised by the rotation thereof.

Furthermore, the installation is particularly easy as there is no need to arrange a cable route up to the pointer itself.

In other words, the balancing machine comprises a wireless (type) electricity transfer system, and said energy transfer system is adapted to transfer the electricity provided by an electrical power source (i.e. an electricity source) to the laser pointer.

Another aspect of the invention envisages that said electricity transfer system can be the inductive type.

Thanks to such a solution, the balancing machine is provided with a particularly effective electricity transfer technology.

Still another aspect of the invention envisages that the electricity transfer system can comprise an emitting circuit (adapted to be connected to an electrical power source, i.e., an electricity source), where said emitting circuit is fixed (directly or indirectly, possibly removably) to the supporting frame without residual degrees of freedom, and a receiving circuit (electrically connected to the laser pointer and) integral in rotation with the laser pointer around said rotation axis.

Thanks to such a solution, the architecture of the energy transfer system is particularly rational.

In use, the transmitting circuit is adapted to be connected to a source of electricity, so as to transfer said electricity to the receiving circuit, and the receiving circuit is connected (in a wired manner) to the laser pointer so as to provide it with the electricity received.

A further aspect of the invention envisages that the laser pointer can be mounted on a rotatable shaft of the actuator, and that said actuator can be mounted on a support flange rigidly fixed to the supporting frame.

Still, a further aspect of the invention envisages that the balancing machine can comprise a limit switch assembly configured to limit the rotational excursion of the laser pointer in at least one direction around the rotation axis.

Thanks to such a solution, it is possible to define at least one standardised (i.e., fixed) end position with respect to said rotation axis, which allows the laser pointer and the elements to which it is connected to be precisely and repetitively repositioned whenever the elements of the balancing machine, e.g., the actuator or the laser pointer, need to be acted on in order to carry out routine or extraordinary maintenance.

Another aspect of the invention envisages that the laser pointer, actuator, emitting circuit and receiving circuit can be mounted on the same support flange, and that said support flange can be adapted to be fixed, preferably rigidly fixed, to the supporting frame.

Thanks to such a solution, the assembly and eventual disassembly of the balancing machine is particularly convenient and fast. In fact, the laser pointer, the actuator, the emitting circuit and the receiving circuit can first be mounted on the support flange, and then the block thus obtained can be fixed to the supporting frame of the balancing machine by means of the support flange itself, without any disturbance caused by the presence and size of the other elements constituting the balancing machine.

Still another aspect of the invention envisages that the limit switch assembly can comprise an abutment flange rotationally integral with the rotating shaft of the actuator and a locking pin fixed to the support flange.

A further aspect of the invention envisages that the limit switch assembly can comprise an abutment flange integral in rotation with the drive shaft of the actuator and a locking pin inserted within a through slot made in the abutment flange and adapted to slide therein during the rotation of the drive shaft around the rotation axis (i.e., during the rotation of the abutment flange around said rotation axis).

For example, said locking pin can be fixed to the support flange.

### BRIEF DESCRIPTION OF THE DRAWINGS

Further features and advantages of the invention will be more apparent after reading the following description provided by way of a non-limiting example, with the aid of the figures shown in the accompanying tables.
Figure 1 is a perspective view of a balancing machine according to the invention.
Figure 2 is a front side view of the balancing machine of figure 1.
Figure 3 is a sectional view along the line III-III of figure 2.
Figure 4 is a perspective view of some elements of the balancing machine and in particular in which a laser pointer, an electricity transfer system for powering the laser pointer and an actuator for moving the laser pointer itself, and a first embodiment of a limit switch assembly can be seen.
Figure 5 is another perspective view of some elements of the balancing machine in which in particular a laser pointer, an actuator for the movement of the laser pointer itself and said first embodiment of a limit switch assembly can be seen.
Figure 6 is another perspective view of some elements of the balancing machine in which in particular a laser pointer, an actuator for the movement of the laser pointer itself and a second embodiment of a limit switch assembly can be seen.

### BEST MODE TO IMPLEMENT THE INVENTION

With particular reference to such figures, a balancing machine for wheels 15, e.g., wheels of vehicles such as cars or trucks, where said wheels 15 are provided with a rim 20 and a tyre 25 installed on the rim 20, has been globally indicated with 10.

The balancing machine 10 comprises a box-shaped supporting frame 30, e.g., provided with a base for supporting (and possibly fixing) to the ground and a plurality of vertical walls rising from the base and peripherally delimiting a cavity of the supporting frame 30. The balancing machine 10, then, comprises a shaft 35 rotatably associated with the supporting frame 30 with respect to a rotation axis R1, preferably horizontal, for example by means of a suspension connected to the supporting frame 30.

The suspension is of a type known to the person skilled in the art and therefore not described further.

The shaft 35 has (along its longitudinal extension) a first section which is contained in the cavity of (i.e., defined by) the supporting frame 30 and a second section which protrudes outside the supporting frame 30.

On the shaft 35, in particular at the second section, the wheel 20 with the tyre 25 installed thereon is removably fixed, i.e., the wheel 15 is removably fixed on said second section. In particular, the rim 20 (with the tyre installed thereon) is made rotationally integral with the shaft 35 by fixing means, not illustrated, for example adapted to allow the rim 20 to be removably locked to an abutment disc integral with the shaft 35, i.e., to the second section of the shaft 35.

As can be better seen in the accompanying figures, the wheel 15 is mounted on the shaft 35 so that an inner face of the rim 20, i.e., the one adapted in use (i.e., when fixed to the vehicle) to face the vehicle on which the wheel 15 is mounted, faces the balancing machine 10, i.e., the supporting frame 30 thereof.

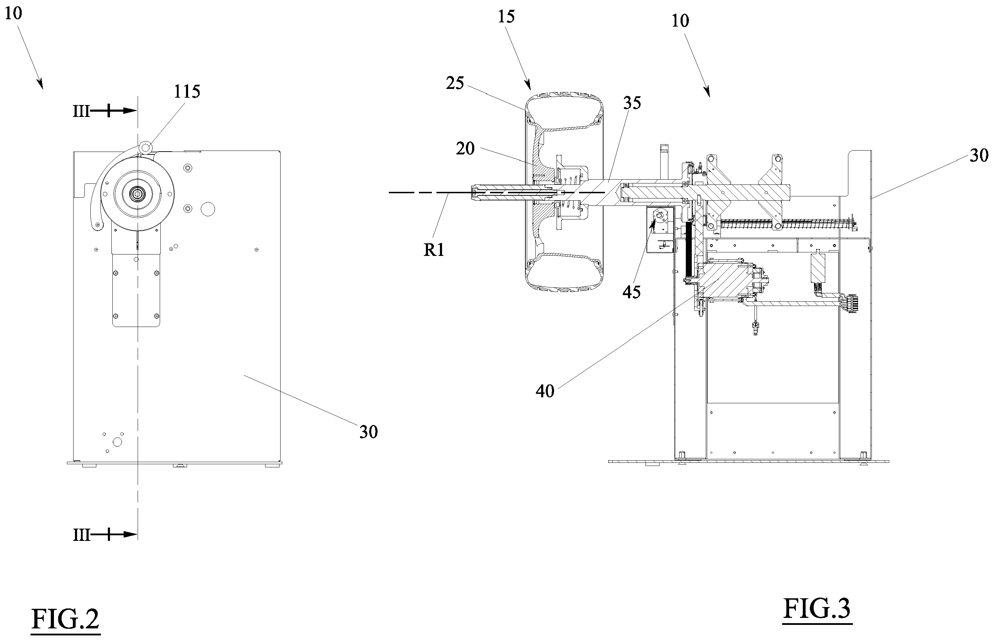

The shaft 35 is rotated with respect to the rotation axis R1 by means of a motor 40, e.g., an electric motor, which, as can be intuited from figure 3, can be received and fixed within the cavity of the supporting frame 30.

The motor 40 is fixed to the supporting frame 30 and is connected to the shaft 35, e.g., by means of a transmission, so as to rotate it around said rotation axis R1.

The balancing machine 10 is provided with a plurality of force transducers (not illustrated), e.g., associated as known with the suspension, to detect the imbalances which generate on the shaft 35 during the rotation of the wheel 15 if it is not perfectly balanced, i.e., if there are imbalances in the distribution of mass.

The balancing machine 10 then comprises a laser pointer 45 configured to indicate on the rim 20 of the wheel 15 an allocation position of a compensating mass (or balancing mass, or equilibrium mass).

For example, said laser pointer 45 can comprise a light source of the LED (Light Emitting Diode) type, e.g., a laser diode.

The laser pointer itself is known and therefore not further described in detail.

In practice, the laser pointer 45 is configured to emit a directional beam of light, in the spectrum of light visible to the human eye, and said beam of light hits the surface of the rim 20 of the wheel 15, defining a bright spot (or point) thereon which identifies the allocation position where the compensating mass must be applied (e.g., glued) to obtain the balancing of the wheel 15.

In particular, the laser pointer 45 is rotatably associated with the supporting frame 30 with respect to a respective rotation axis R2 which is transverse, e.g., preferably orthogonal, to the rotation axis R1 of the wheel 15, and driven around said rotation axis R2 by an actuator 50, so as to be able to direct the beam of light on the rim 20 (i.e., on the inner face thereof) of the wheel 15 in an appropriate manner (i.e., in the allocation position suitable for the case under consideration).

Said actuator 50 is, for example, an electric motor, e.g., it can preferably be a stepper motor.

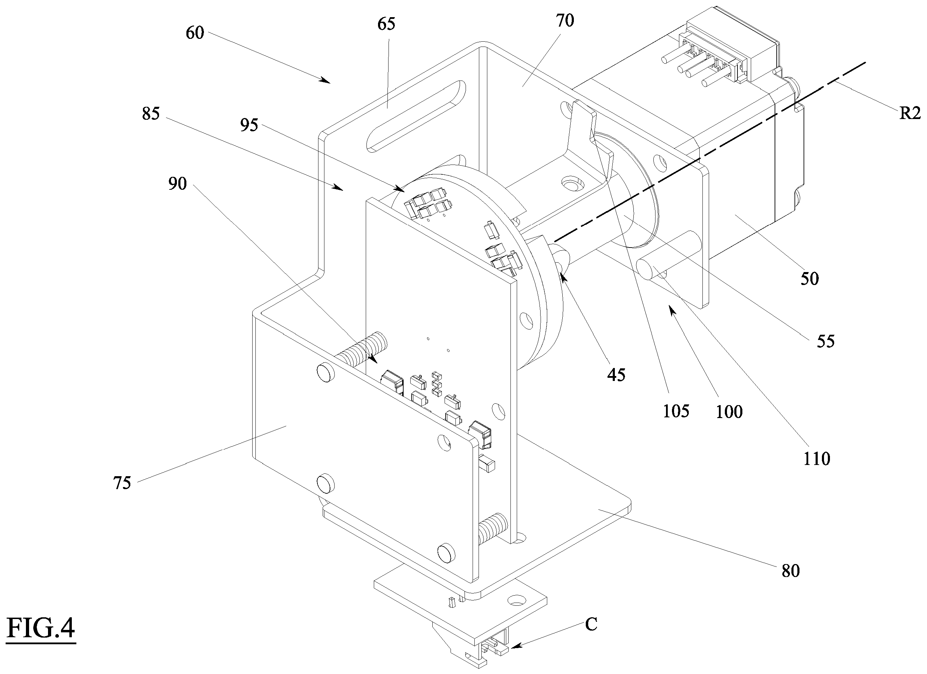

In particular, as can be intuited from figure 4, the actuator 50 is provided with a movement shaft 55, driven in rotation thereon around said rotation axis R2.

The laser pointer 45 is (mounted, i.e.) fixed (preferably removably and) integral in rotation (with respect to said rotation axis R2) on said movement shaft 55 of the actuator 50.

As can be seen in the accompanying figures, the actuator 50 can be fixed, e.g., screwed, to a support flange 60, which is adapted to be rigidly fixed (removably) to the supporting frame 30 of the balancing machine 10.

Such a support flange 60, as for example illustrated in figure 4, can have a back wall 65, for example a flat one, two opposite and preferably substantially parallel side walls 70,75 which are derived (e.g., seamlessly) from opposite side edges of the back wall 65 transversely, e.g., substantially orthogonally, thereto, and can further have a lower wall 80 which is derived (e.g., seamlessly), from a lower edge of the back wall 65 transversely, e.g., orthogonally thereto.

The side walls 70,75 and the lower wall 80 are derived from the back wall 65 in the same direction along a transverse direction, e.g., orthogonal, to the back wall 65 itself.

Such a support flange 60 is rigid, i.e., not deformable when subjected to the usual loads for which it is intended.

For example, such a support flange 60 can be made available by a metal sheet, which can be folded so as to provide said back wall 65, said side walls 70,75 and said lower wall 80.

Between the back wall 65, the side walls 70,75 and the lower wall 80, there can remain substantially defined (or at least partially delimited) a receiving seat or recess (or receiving cavity) of the laser pointer 45 which is (at least) open in the emitting direction thereof.

For example, as better seen in such figure 4, the actuator 50 can be fixed, e.g., screwed, to a side wall 70 of the support flange 60 with the movement shaft 55 inserting through a through slot made in said side wall itself, so as to insert within said receiving recess.

The support flange 60 is rigidly fixed (removably), i.e., fixed without residual degrees of freedom, to the supporting frame 30 of the balancing machine 10, e.g., screwed thereto at the back wall 65.

In detail, as can be better seen from figure 4, the laser pointer 45 can be fixed, for example by means of said support flange 60 below (i.e., at a vertical height below) the shaft 35 which drags the wheel 15 in rotation.

The laser pointer 45 is electrically powered by means of a wireless electricity transfer system 85.

In other words, the balancing machine 10 comprises a wireless (type) electricity transfer system 85, and such an electricity transfer system 85 is in particular adapted to transmit the electricity made available by an electrical power source (e.g., the fixed electrical grid or a power battery) to the laser pointer 45.

In more detail, said electricity transfer system 85 is preferably of the inductive type.

As illustrated in figure 4, said electricity transfer system 85 comprises an emitting circuit 90 and a receiving circuit 95 (e.g., each made on a respective printed circuit board), which are separate and distinct.

The receiving circuit 95 is integral in rotation with the laser pointer 45 around said rotation axis R2.

The emitting circuit 90 is adapted to be connected to said electrical power source, e.g., the electric power grid (e.g., the fixed electric grid) or a power supply battery, so as to receive said electricity.

In detail, the emitting circuit 90 is adapted to be connected to said electrical power source so as to receive said electricity therefrom in the form of (i.e., by means of) an electric current (i.e., a flow of electrical charges) flowing from the electrical source to the emitting circuit 90.

The emitting circuit 90 can also be configured to modulate said electric current, i.e., change the voltage and/or current intensity thereof.

The transmitting circuit 90 is adapted to transmit (i.e., transfer) to the receiving circuit 95 the electricity received from the electric power source.

In detail, the emitting circuit 90 and the receiving circuit 95 each comprise a conductive coil, and said conductive coils couple electromagnetically allowing the transfer of electricity between the emitting circuit 90 and the receiving circuit 95.

In particular, said conductive coils of the emitting circuit 90 and the receiving circuit 95 are preferably mutually facing so as to maximise the electromagnetic coupling.

The receiving circuit 95 is, therefore, electrically connected (in a wired manner, i.e., by means of wiring) to the laser pointer 45 in such a way as to power it by means of the received electricity, i.e., supply said received electricity to the laser pointer 45.

In detail, the receiving circuit 95 is connected (in a wired manner) to the laser pointer 45 so as to provide said electricity thereto in the form of (i.e., by means of) an electric current (i.e., a flow of electrical charges) which flows from the receiving circuit 95 to the laser pointer 45, i.e., an appropriately modulated electric current.

In other words, the receiving circuit 95 can be configured to vary the voltage and/or current intensity of the electric current it provides to the laser pointer 45 so as to make it suitable for the powering thereof for its operation.

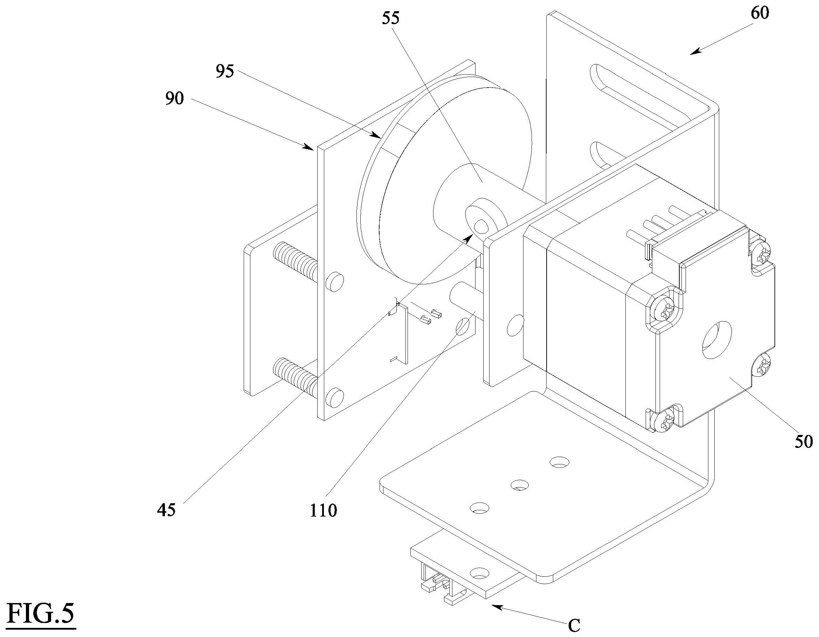

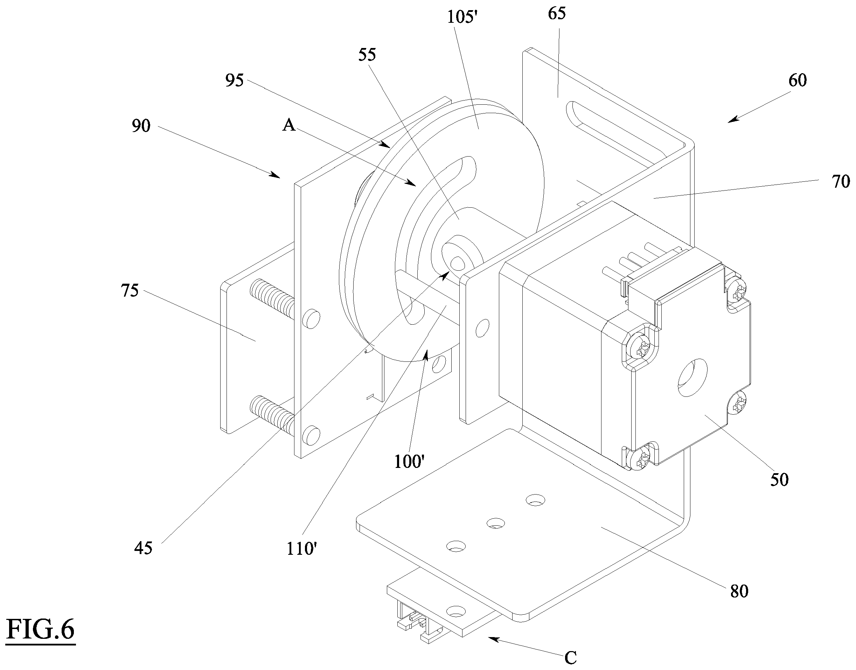

For example, the emitting circuit 90 can be fixed, e.g., screwed (by means of threaded pins as can be intuited from the view of figure 5 or 6), to a side wall of the support flange 60, e.g., at the side wall 75 opposite that to which the actuator 50 is fixed.

Furthermore, said emitting circuit 90 can preferably be fixed to said side wall 75 so as to face said housing seat or recess.

The emitting circuit 90, as can be seen in figure 4, can be (is adapted to be) connected to said electrical power source by means of an electrical connector C, to which the emitting circuit 90 is connected in a wired manner (i.e., via cable/cables), and said electrical connector C is (adapted to be) connected to said electrical power source (i.e., an electricity source) in a wired manner (i.e., via cable/cables).

For example, said electrical connector C can be arranged (i.e., positioned) at the lower wall 80 of the support flange 60.

Said emitting circuit 90 is adapted to be (removably) fixed to the supporting frame 30, by means of the support flange 60, without residual degrees of freedom.

The receiving circuit 95, as mentioned above, is integral in rotation with the laser pointer 45.

In particular, said receiving circuit 95 can be fixed (integral in rotation) to the movement shaft 55 of the actuator 50, for example at an end thereof which is proximal to the side wall 75 of the support flange 60 opposite that to which the actuator 50 itself is fixed, i.e., proximal to the emitting circuit 90.

Both the receiving circuit 95 and the laser pointer 45 are then mounted (i.e., fixed, preferably removably) on the movement shaft 55 of the actuator 50.

The laser pointer 45, the actuator 50, the emitting circuit 90 and the receiving circuit 95 can thus be mounted on the same support flange 60, and said support flange 60, as mentioned above, is fixed (removably, e.g., screwed) to the supporting frame 30.

The balancing machine 10 comprises, moreover, a limit switch assembly 100, 100' configured to limit the rotational excursion of the laser pointer 45 in (at least) one direction around the rotation axis R2, for example in a clockwise direction.

In other words, such a limit switch assembly 100,100' defines at least one end position with respect to the rotation of the movement shaft 55, and the laser pointer therewith, around said rotation axis R2.

For example, such a limit switch assembly 100,100' can define both end positions of the movement shaft 55, and the laser pointer therewith, around said rotation axis R2, i.e., an end position for the rotation around the rotation axis R2 in one direction and an end position for the rotation around the rotation axis R2 in the opposite direction.

For example, as can be seen in figure 4, such a limit switch assembly 100 comprises an abutment flange 105 integral in rotation with the rotatable movement shaft 55 of the actuator 50, in particular fixed (e.g., screwed) integral in rotation therewith.

Such an abutment flange 105 can have a first section (parallel to the rotation axis R2) superimposed on and fixed to the movement shaft 55 and a second section, which is derived from the first section substantially at right angles therewith, extending transversely (e.g., substantially orthogonally) to said rotation axis R2.

The limit switch assembly 100 further comprises a locking pin 110 rigidly fixed (without residual degrees of freedom) to the support flange 60, e.g., at the side wall of the support flange 60 to which the actuator 50 itself is fixed, and which extends longitudinally substantially parallel to the rotation axis R2 (i.e., parallel to the movement shaft 55).

With particular reference to figure 5, the locking pin 110 is fixed to the support flange so that it is arranged along the trajectory of the abutment flange 105 when the movement shaft 55 rotates around the rotation axis R2.

The rotation of the movement shaft 55 of the actuator 50 in a clockwise direction is, therefore, unrestricted until the abutment flange 105 meets the locking pin 110, preventing any further clockwise rotation of the movement shaft 55 of the actuator 50.

Alternatively, as can be seen in figure 6, such a limit switch assembly 100' can comprise an abutment flange 105', fixed to the movement shaft 55 integral in rotation therewith around the rotation axis R2, for example fixed to one end of the movement shaft 55 which is distal from the side wall of the support flange 60 to which the actuator 50 itself is fixed. For example, such an abutment flange 105' can take the form of a discoidal body provided with two opposite major faces (preferably flat and mutually parallel, and for example substantially round) connected to each other by an annular face (which substantially defines the thickness of the discoidal body), and can be connected to the movement shaft 55 (for example fixed by means of one of said major faces and) arranged with its major faces substantially orthogonal to the rotation axis R2 of the movement shaft 55.

Again, as can be better seen in figure 6, the receiving circuit can be fixed (removably) to said abutment flange 105' (at one of said major faces thereof), and thus be fixed (and integral in rotation) to the movement shaft 55 by means of said abutment flange 105' itself. The abutment flange 105' can have a through hole A (passing from one major face to the other major face of the discoidal body of the abutment flange 105') extending longitudinally along an arc of circumference having an axis parallel to the rotation axis R2 of the movement shaft 55.

Again with reference to figure 6, the limit switch assembly 100' comprises a locking pin 110' rigidly fixed (without residual degrees of freedom) to the support flange 60, e.g., at the side wall of the support flange 60 to which the actuator 50 itself is fixed, and which extends longitudinally substantially parallel to the rotation axis R2.

The locking pin 110', e.g., at one of its sections distal from the side wall of the support flange 60 to which it is fixed, is inserted within the through slot A made on the abutment flange 105'.

During the rotation of the movement shaft 55 around the rotation axis R2, and the abutment flange 105' therewith, the locking pin 110' slides inside the through slot A. Such a through slot A, therefore, provides an abutment surface at each longitudinal end for the locking pin 110' which prevents a further rotation of the drive shaft 55 in a respective direction of rotation around the rotation axis R2.

The balancing machine 10, moreover, comprises an apparatus for measuring the geometric parameters (i.e., one or more dimensions) of the rim 20 installed on the shaft 35, i.e., of the rim 20 made integral with the shaft 35 by the fixing means.

Such a measuring apparatus can, in particular, comprise a rod which is rotatably associated with the supporting frame 30 with respect to an axis, which is parallel and eccentric with respect to the rotation axis R1 of the shaft 35.

In detail, such a rod is slidingly associated with a straight guide extending along a direction parallel to the rotation axis R1 of the shaft 35, and said guide is rotatably associated with the supporting frame 30 with respect to said axis parallel and eccentric to the rotation axis R1 of the shaft.

The measuring apparatus then comprises a feeler member 115 connected to the rod, which is adapted to be placed in contact with rim 20 when measuring the geometric parameters of the rim 20.

For example, the feeler member 115 is connected by means of an arm to an end of the rod protruding outwards with respect to the supporting frame 30.

The rod can be driven, for example by the operator, between an initial reference position, in which the feeler member 115 is distant from the rim 20, and a plurality of measuring positions (different from each other), in which the feeler member 115 is in contact with the rim 20, for example in contact with the rim 20.

In particular, in such measuring positions, the feeler member is placed in contact with predetermined positions of the rim 20 which allow the calculation of the dimensional parameters thereof, such as in particular the diameter and depth (i.e., the extension of the rim along a direction parallel to the rotation axis R1 of the shaft 35).

The measuring apparatus then comprises a plurality of sensors configured to detect and measure the amount of displacement of the rod in translation (along the guide) and in rotation with respect to said axis, of which at least a first sensor configured to measure the translation(s) made by the rod along the translation direction and a second sensor configured to measure the rotation(s) made by the rod with respect to the axis.

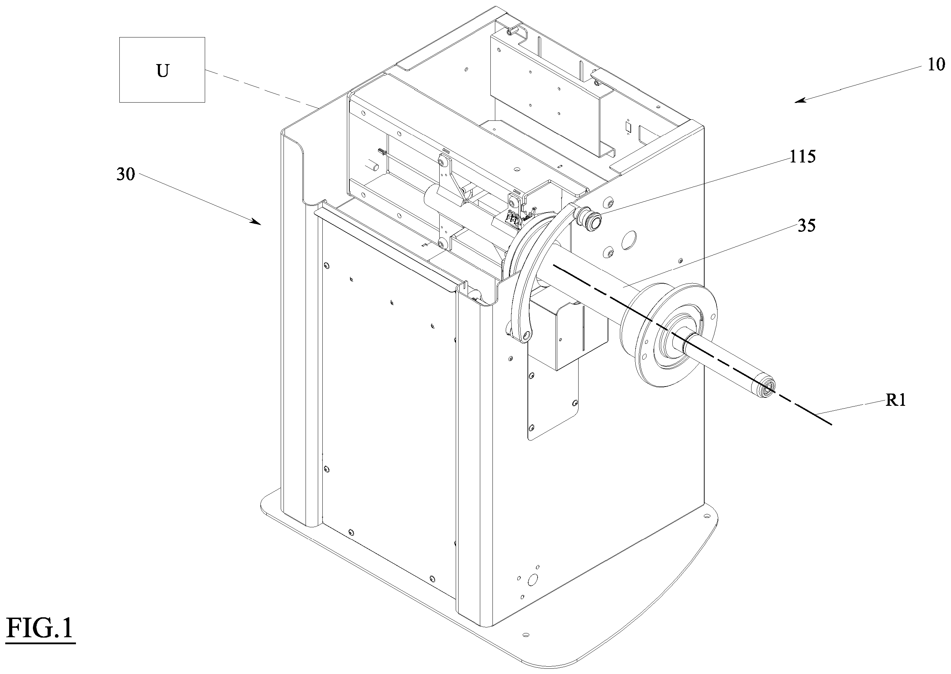

The balancing machine 10 further comprises an electronic control unit U (schematically illustrated in figure 1) configured to control the operation of the balancing machine 10.

In particular, such an electronic control unit U is operatively connected to one or more of the constituent elements of the balancing machine 10 to control the operation thereof and, if necessary, also to perform diagnostics thereof.

In particular, the electronic control unit U is operatively connected to the measuring apparatus, so as to receive and process the data detected by the same and to determine the dimensional parameters of the rim 20 of the wheel 15, to the motor 40, so as to selectively drive it to drive the shaft 35 in rotation around the rotation axis R1 (and therewith the wheel fixed thereon), to the force transducers, so as to receive and process the data detected by the same with respect to any forces acting on the shaft 35 due to imbalances of the wheel 15 and consequently calculate an allocation position of a compensating mass and the amount of the compensating mass itself, to the actuator 50, so as to selectively drive it to rotate the laser pointer 45 to indicate by means of the laser beam emitted by the laser pointer 45 the determined point (i.e., position) of allocation of the compensating mass.

The balancing machine 10 can further comprise a monitor (not illustrated) operatively connected to the electronic control unit U.

In particular, the electronic control unit U can be configured to display one or more data on said monitor, e.g., the value of the measured geometric parameters and/or the value of the compensating mass to be applied.

Again, the electronic control unit U can be configured to detect when the movement shaft 55 has reached an end limit switch position (with respect to the rotation around the rotation axis R2), defined by the limit switch assembly 100, 100'.

For example, for this purpose, the electronic control unit U can be configured to determine whether the movement shaft 55 has reached an extreme end limit switch position, based on the electrical current absorption of the actuator 50.

In particular, during the rotation of the movement shaft 55, when the abutment flange 105 abuts on the locking pin 110 or when the locking pin 110' comes to abut on one of the abutment surfaces made available by the slot, an obstacle to the rotation of the movement shaft 55 is created, which causes an increase in the electrical absorption of the actuator 50 (which strains trying to rotate the movement shaft 55) above a threshold value.

The electronic control unit 55 can, therefore, be configured to monitor the electrical current absorption of the actuator 50, to compare (continuously or at discrete intervals) the same with a threshold value (e.g., set or settable in the memory unit of the electronic control unit U) and, if the detected electrical current absorption value exceeds said threshold value, the electronic control unit U can be configured to terminate the drive of the actuator 50, i.e., terminate the rotation of the movement shaft 55.

The operation of the balancing machine 10 is as follows.

To perform the balancing of a wheel 15, the operator momentarily fixes the wheel 15, by means of the rim 20, to the shaft 35, making it integral in rotation therewith around the rotation axis R1.

At this point, the feeler member 115 is moved, e.g., manually by the operator, from the reference position into the (pre-determined) measuring positions, causing translation and/or rotation movements of the rod.

The electronic control unit U, by means of the measuring apparatus, receives data on the displacements (translation and/or rotation) of the rod and on the basis thereof, determines the geometric (i.e., dimensional) parameters of the rim 20.

At this point, the motor 40 is driven, e.g., by the electronic control unit U, rotating the shaft 35 and, by means of the force transducers, the electronic control unit detects any unbalances (i.e., uneven distribution of mass) of the wheel 15.

On the basis of the detected imbalances, i.e., on the basis of data received from the force transducers, the electronic control unit U calculates the amount (i.e., the value) of a compensating mass to be applied and the allocation point (i.e., the position) thereof.

At this point, the electronic control unit, by driving the actuator 50, controls the positioning of the laser pointer 45 so as to direct the beam (laser) of light emitted by it to the determined allocation point.

At the same time, the electronic control unit U can be optionally configured to display on the monitor (if present) the value of the compensating mass to be applied on said determined allocation point.

The invention thus conceived is susceptible to several modifications and variations, all falling within the scope of the inventive concept.

In practice, the materials used, as well as the contingent shapes and sizes, can be whatever according to the requirements without for this reason departing from the scope of protection of the following claims.

## Claims

1. Balancing machine (10) for wheels (15) provided with a rim (20) equipped with a tyre (25) comprising:
- a supporting frame (30),
- a motor (40) adapted to drive in rotation a shaft (35) rotatably associated with the supporting frame (30) according to a rotation axis (R1) and on which the wheel (15) is adapted to be removably mounted integral in rotation with the shaft (35),
- a laser pointer (45) configured to indicate on the rim (20) of the wheel (15) an allocation position of a compensating mass, the laser pointer (45) being rotatably associated with the supporting frame (30) with respect to a rotation axis (R2) transverse to the rotation axis (R1) of the shaft (35) and driven around said rotation axis (R2) by an actuator (50),
**characterized in that**
said laser pointer (45) being adapted to be electrically powered by means of a wireless electricity transfer system (85).

2. The balancing machine (10) according to claim 1, wherein said electricity transfer system (85) is of the inductive type.

3. The balancing machine (10) according to claim 1, wherein the electricity transfer system (85) comprises an emitting circuit (90) and a receiving circuit (95), the receiving circuit (95) being integral in rotation with the laser pointer (45) around said rotation axis (R2).

4. The balancing machine (10) according to claim 1, wherein the laser pointer (45) is mounted on a rotatable drive shaft (55) of the actuator (50), said actuator (50) being mounted on a support flange (60) rigidly removably fixed to the supporting frame (30).

5. The balancing machine (10) according to claim 1, comprising a limit switch assembly (100,100') configured to limit the rotational excursion of the laser pointer (45) in at least one direction around the rotation axis (R2).

6. The balancing machine (10) according to claim 3, wherein the laser pointer (45), the actuator (50), the emitting circuit (90) and the receiving circuit (95) are mounted on the same support flange (60), said support flange (60) being adapted to be removably fixed to the supporting frame (30).

7. The balancing machine (10) according to claim 4 and 5, wherein the limit switch assembly (100) comprises an abutment flange (105) integral in rotation with the drive shaft (55) of the actuator (50) and a locking pin (110) fixed to the support flange (60).

8. The balancing machine (10) according to claim 4, wherein the limit switch assembly (100') comprises an abutment flange (105') integral in rotation with the drive shaft (55) of the actuator (50) and a locking pin (110') inserted within a through slot (A) made in the abutment flange (105') and adapted to slide therein during the rotation of the drive shaft (55) around the rotation axis (R2).

## Patentansprüche

1. Auswuchtmaschine (10) für Räder (15), die mit einer Felge (20) versehen sind, die mit einem Reifen (25) ausgerüstet ist, umfassend:
- einen Tragrahmen (30),
- einen Motor (40), der angepasst ist, um eine Welle (35) in Drehung zu versetzen, die drehbar mit dem Tragrahmen (30) gemäß einer Drehachse (R1) assoziiert ist und auf der das Rad (15) angepasst ist, um abnehmbar und drehfest mit der Welle (35) montiert zu werden,
- einen Laserzeiger (45), der konfiguriert ist, um an der Felge (20) des Rads (15) eine Zuordnungsposition einer Ausgleichsmasse anzugeben, wobei der Laserzeiger (45) in Bezug auf eine Drehachse (R2) quer zu der Drehachse (R1) der Welle (35) drehbar mit dem Tragrahmen (30) assoziiert ist und durch einen Aktuator (50) um die Drehachse (R2) angetrieben wird,
**dadurch gekennzeichnet, dass** der Laserpointer (45) angepasst ist, um mittels eines drahtlosen Stromübertragungssystems (85) elektrisch betrieben zu werden.

2. Auswuchtmaschine (10) nach Anspruch 1, wobei das Stromübertragungssystem (85) von dem induktiven Typ ist.

3. Auswuchtmaschine (10) nach Anspruch 1, wobei das Stromübertragungssystem (85) eine Sendeschaltung (90) und eine Empfangsschaltung (95) umfasst, wobei die Empfangsschaltung (95) um die Drehachse (R2) drehfest mit dem Laserpointer (45) verbunden ist.

4. Auswuchtmaschine (10) nach Anspruch 1, wobei der Laserpointer (45) auf einer drehbaren Antriebswelle (55) des Aktuators (50) montiert ist, der Aktuator (50) auf einem Trägerflansch (60) montiert ist, der starr und abnehmbar am Tragrahmen (30) befestigt ist.

5. Auswuchtmaschine (10) nach Anspruch 1, umfassend eine Endschalteranordnung (100, 100'), die konfiguriert ist, um die Drehauslenkung des Laserzeigers (45) in mindestens einer Richtung um die Rotationsachse (R2) zu begrenzen.

6. Auswuchtmaschine (10) nach Anspruch 3, wobei der Laserpointer (45), der Aktuator (50), die Sendeschaltung (90) und die Empfangsschaltung (95) auf demselben Trägerflansch (60) montiert sind, wobei der Trägerflansch (60) angepasst ist, um abnehmbar an dem Tragrahmen (30) befestigt zu sein.

7. Auswuchtmaschine (10) nach Anspruch 4 und 5, wobei die Endschalteranordnung (100) einen Anschlagflansch (105), der drehfest mit der Antriebswelle (55) des Stellantriebs (50) ist, und einen Arretierstift (110), der an dem Trägerflansch (60) befestigt ist, umfasst.

8. Auswuchtmaschine (10) nach Anspruch 4, wobei die Endschalteranordnung (100') einen Anschlagflansch (105'), der drehfest mit der Antriebswelle (55) des Stellantriebs (50) ist, und einen Arretierstift (110'), der in einen Durchgangsschlitz (A) eingesetzt ist, der in dem Anschlagflansch (105') angefertigt und angepasst ist, um während der Drehung der Antriebswelle (55) um die Drehachse (R2) darin zu gleite, umfasst.

## Revendications

1. Machine d'équilibrage (10) de roues (15) munies d'une jante (20) équipée d'un pneu (25) comprenant :
- un cadre de support (30),
- un moteur (40) adapté pour entraîner en rotation un arbre (35) relié de manière rotative au cadre de support (30) selon un axe de rotation (R1) et sur lequel la roue (15) est adaptée pour être montée de manière amovible en rotation solidaire de l'arbre (35),
- un pointeur laser (45) configuré pour indiquer sur la jante (20) de la roue (15) une position de placement d'une masse de compensation, le pointeur laser (45) étant relié de manière rotative au cadre de support (30) par rapport à un axe de rotation (R2) transversal à l'axe de rotation (R1) de l'arbre (35) et entraîné autour dudit axe de rotation (R2) par un actionneur (50),
**caractérisée en ce que**
ledit pointeur laser (45) étant adapté pour être alimenté en électricité au moyen d'un système de transfert d'électricité sans fil (85).

2. Machine d'équilibrage (10) selon la revendication 1, dans laquelle ledit système de transfert d'électricité sans fil (85) est de type inductif.

3. Machine d'équilibrage (10) selon la revendication 1, dans laquelle le système de transfert d'électricité (85) comprend un circuit d'émission (90) et un circuit de réception (95), le circuit de réception (95) étant solidaire en rotation du pointeur laser (45) autour de l'axe de rotation (R2).

4. Machine d'équilibrage (10) selon la revendication 1, dans laquelle le pointeur laser (45) est monté sur un arbre d'entraînement rotatif (55) de l'actionneur (50), ledit actionneur (50) étant monté sur une bride de support (60) fixée de manière rigide et amovible au cadre de support (30).

5. Machine d'équilibrage (10) selon la revendication 1, comprenant un groupe de fin de course (100, 100') configuré pour limiter l'amplitude de rotation du pointeur laser (45) dans au moins une direction autour de l'axe de rotation (R2).

6. Machine d'équilibrage (10) selon la revendication 3, dans laquelle le pointeur laser (45), l'actionneur (50), le circuit d'émission (90) et le circuit de réception (95) sont montés sur la même bride de support (60), ladite bride de support (60) étant adaptée pour être fixée de manière amovible au cadre de support (30).

7. Machine d'équilibrage (10) selon les revendications 4 et 5, dans laquelle le groupe de fin de course (100) comprend une collerette d'appui (105) solidaire en rotation de l'arbre d'entraînement (55) de l'actionneur (50) et une goupille de verrouillage (110) fixée à la bride de support (60).

8. Machine d'équilibrage (10) selon la revendication 4, dans laquelle le groupe de fin de course (100') comprend une collerette d'appui (105') solidaire en rotation de l'arbre d'entraînement (55) de l'actionneur (50) et une goupille de verrouillage (110') insérée dans une fente débouchante (A) réalisée dans la collerette d'appui (105') et adaptée pour coulisser dans celle-ci pendant la rotation de l'arbre d'entraînement (55) autour de l'axe de rotation (R2).
